# EUROPEAN PATENT APPLICATION

(11) **EP 2 509 359 A2**
(43) Date of publication of application: **10.10.2012**
(21) Application number: 10834770.9
(22) Date of filing: 01.12.2010
(51) Int. Cl.: H04W 28/24, H04L 29/06

(54) **METHOD AND APPARATUS FOR TRANSMITTING A MULTIMEDIA DATA PACKET USING CROSS-LAYER OPTIMIZATION**

(30) Priority: 01.12.2009 KR 20090117984
(71) Applicant: Samsung Electronics Co., Ltd., Suwon-si, Gyeonggi-do, 443-742 (KR); University-Industry Cooperation Group of Kyung Hee University, Gyeonggi-do 446-701 (KR)
(72) Inventor: SUH, Doug-young, Yeongtong-gu, Suwon-si Gyeonggi-do 443-742 (KR); PARK, Gwang-hoon, Yeongtong-gu, Suwon-si Gyeonggi-do 443-742 (KR); KIM, Kyu-heon, Yeongtong-gu, Suwon-si Gyeonggi-do 443-742 (KR)
(74) Representative: Hutter, Jacobus Johannes
(86) International application number: PCT/KR2010/008556
(87) International publication number: WO 2011/068355

(57) **Abstract**

The present invention relates to a method for transmitting a multimedia data packet, comprising the following processes: receiving bottom-up network abstraction layer (B-NAL) information from a network entity; generating top-down network abstraction layer (T-NAL) information on the multimedia data to be transmitted; generating a multimedia data packet containing said T-NAL information; and transmitting the multimedia data packet generated in the previous process, to the network entity, in consideration of said B-NAL information.

## Description

### [Technical Field]

The present invention relates to a method and apparatus for transmitting a multimedia data packet. More particularly, the present invention relates to a method and apparatus for transmitting a multimedia data packet using cross layer optimization.

### [Background Art]

The term 'multimedia service' refers to interactive services such as video telephony, streaming services such as Video-On-Demand (VOD) service, and multicast/broadcast services. Real-time multimedia services may be classified into interactive services and streaming services according to their service types. Also, the real-time multimedia services may be classified into unicast, multicast, and broadcast according to the number of users who participate in the services.

Schemes of providing Quality of Service (QoS) in the network to provide multimedia services may be roughly classified into a Best Effort (BE) scheme, a per-class QoS scheme, and a per-flow QoS scheme. The BE scheme means supporting nothing for QoS.

The per-class QoS scheme is a scheme of differentiating importance of packets and processing the packets depending on their importance in the middle of the network. In other words, the per-class QoS scheme is a scheme of controlling QoS depending on the importance (i.e., priority) of a packet regardless of the flow to which the packet belongs. Resource reservation between a transmitter and a receiver is not needed to support the per-class QoS scheme. For reference, the priorities may be classified into loss priorities and delay priorities.

The per-flow QoS scheme is a scheme of reserving different resources for different streams. In other words, it is a scheme of reserving different resources (e.g., bitrate, buffer status, etc.) or QoSs (e.g., delay, loss ratio) for different flows. The term 'flow' as used herein may refer to a stream needed for one service. For example, each of a video stream, an audio stream and a text stream needed to provide a VOD service is an individual flow.

Not only IEEE 802.16 (WiBRO and WIMAX) and Long Term Evolution (LTE), but also UMTS (3G) proposed by 3GPP are standardized to support the per-class QoS scheme and the per-flow QoS scheme. However, to use these QoS schemes, an interface between a media layer (or an upper layer) and a network (or a lower layer) is needed.

When Moving Picture Experts Group-2 (MPEG-2) and H.264 are used, or especially when Scalable Video Coding (SVC) is used, different video packets may have different importance. In order to effectively control QoS of video services, it is necessary to identify the importance difference between the packets. In IPv6, in order to identify importance of packets, a packet switching scheme should read 5 turples (a recipient's address, a sender's address, a service's port number in a receiver, a service's port number in a transmitter, and a protocol in use) from an IPv6 header, and then read again header data for identifying importance of packets, from a payload of the video packet. This scheme may suffer from a long processing time for each packet, and violate the independence of the protocol layer.

In other words, a router should read only an IP header of the packet and should be able to process the packet, but it cannot do so. If the importance of packets may be easily identified, QoS control may be smoothly performed in the router. For example, if the network conditions are poor, packets may be discarded in the order of low-importance packets depending on their priorities.

Scalable Video Coding (SVC) technology or Multi-view Video Coding (MVC) technology now under standardization is based on the H.264/AVC standard. In the structure of a bitstream of coded data, a format of a Network Abstraction Layer Unit (NALU) of H.264/AVC is used.

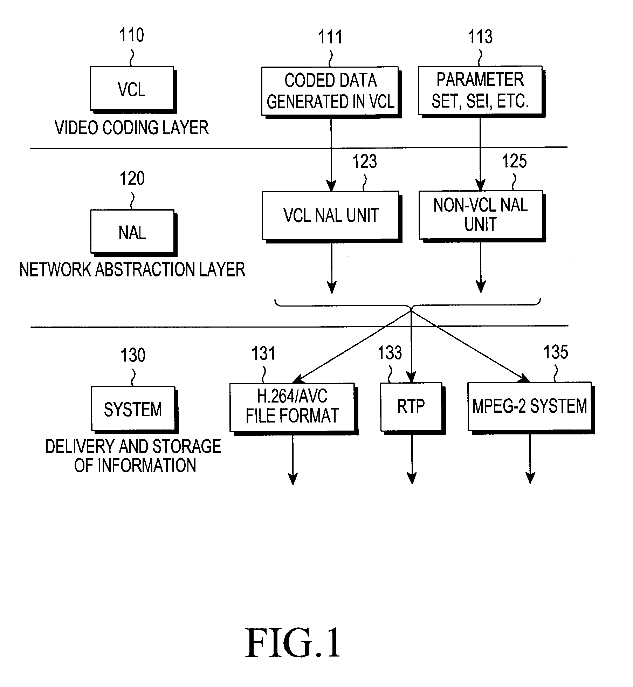

FIG. 1 shows a Video Coding Layer (VCL) and a Network Abstraction Layer (NAL) in H.264/AVC.

In H.264/AVC, as a Network Abstraction Layer (NAL) 120 is defined between a Video Coding Layer (VCL) 110 for dealing with video coding processing and a subsystem 130 for transmitting and storing the coded information, the VCL layer and the NAL layer are separated. In order to map coded data 111 generated in VCL to a bitstream of the subsystem 130, such as a H.264/AVC file format 131, a Real-time Transport Protocol (RTP) 133 and a MPEG-2 system 135, the coded data 111 is processed in a NAL Unit (NALU) in the NAL 120.

The NAL unit is divided into a VCL NAL unit 121 and a non-VCL NAL unit 123. The VCL NAL unit 121 is a NAL unit corresponding to the coded data 111 generated in VCL, and the non-VCL NAL unit 123 is a NAL unit corresponding to a parameter set, SEI, etc. The NAL unit basically includes a NAL header and a Raw Byte Sequence Payload (RBSP), which is a data part of compressed or coded video generated in VCL.

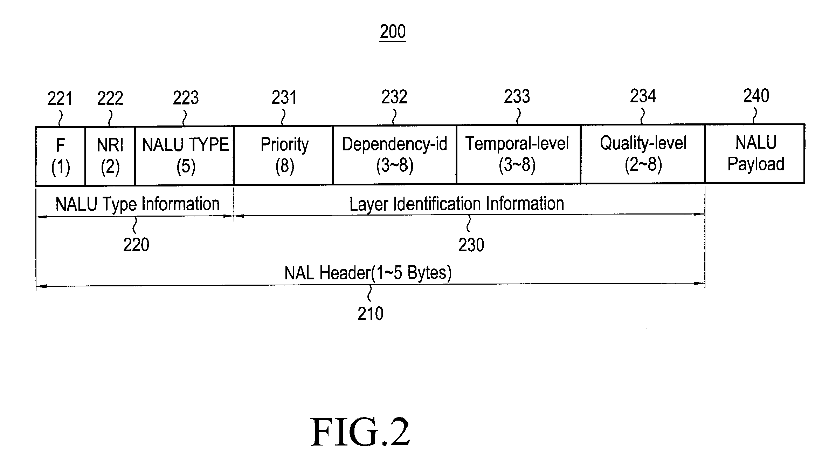

FIG. 2 shows a format of a NAL unit.

Referring to FIG. 2, a NAL unit 200 includes a NAL header 210 and a NALU payload 240.

The NAL header 210 generally has a size of 1 to 5 bytes.

The NAL header 210 includes NALU Type information 220 for indicating a type of the NAL unit, and Layer Identification Information 230 for identifying a layer (a combination of priority, dependency-level, temporal-level and/or a quality-level) of compressed original data included in the NALU payload 240. The NALU Type information 220 includes a fixed bit (F) field 221, a nal_ref_idc (NRI) field 222, which is a flag indicating whether it is a reference picture, and a NALU Type field 223, which is an indicator indicating a type of the NALU.

The Layer Identification Information 230 includes a Priority field P 231 for indicating priority to make it possible to identify a layer of the compressed original data, a Dependency_id field D 232 for indicating a dependency-level, a Temporal_level field T 233 for indicating a temporal-level, and/or a Quality_level field Q 234 for indicating a quality-level.

For reference, the format of a NALU is used in the same way even in MVC. However, in MVC, the NAL header may include View Identification Information for identifying a view, instead of the Layer Identification Information 230, along with the NALU Type information 220.

In accordance with the above-described NALU format for SVC or MVC, the Layer Identification Information 230 or View Identification Information in the NAL header should be parsed all to identify a layer or a view of the NAL unit. In particular, the Layer Identification Information 230 has a size of 2 to 4 bytes, and values of P 231, D 232, T 233 and Q 234 should be all found by parsing the NAL header 210 to determine the layer to which the NAL unit belongs. However, paring the entire NAL header 210 to find the values of P 231, D 232, T 233 and Q 234 in the NAL header 210 gives a burden on the processor and may be a cause of increasing the system cost.

The NAL header 210 includes information for identifying importance of the packet, such as the Priority field P 231. However, the router may not read the importance identification information included in the NAL header because it reads only an IP header and processes the packet. Therefore, the importance identification information needs to be included in an IP header so that the router may read the information for identifying importance.

### [Disclosure]

### [Technical Problem]

An aspect of an exemplary embodiment of the present invention is to provide a method and apparatus for adaptively providing a multimedia service depending on media data, network status, user needs, etc.

Another aspect of an exemplary embodiment of the present invention is to provide an application layer and an integrated network abstraction layer that can exchange information with a sub-network entity.

Another aspect of an exemplary embodiment of the present invention is to provide a method and apparatus for abstracting media data stratus, network status and user needs status and transmitting/receiving them between entities to provide a multimedia service depending on the media data stratus, the network status and the user needs status.

### [Technical Solution]

In accordance with an embodiment of the present invention, there is provided a method for transmitting a multimedia data packet. The method includes receiving Bottom-up Network Abstraction Layer (B-NAL) information from a network entity; generating Top-down Network Abstraction Layer (T-NAL) information about transmission multimedia data; generating a multimedia data packet including the T-NAL information; and transmitting the generated multimedia data packet to the network entity taking into account the B-NAL information.

In accordance with another embodiment of the present invention, there is provided a method for forwarding a multimedia data packet by an entity on a network. The method includes receiving a multimedia packet including Top-down Network Abstraction Layer (T-NAL) information from a transmission device; and forwarding the multimedia packet depending on the received T-NAL information.

In accordance with further another embodiment of the present invention, there is provided an apparatus for transmitting a multimedia data packet. The apparatus includes a Bottom-up Network Abstraction Layer (B-NAL) register for receiving B-NAL information from a network entity; a Cross Layer Optimization (CLO) unit for generating Top-down Network Abstraction Layer (T-NAL) information about transmission multimedia data; and a packet generator for generating a multimedia data packet including the T-NAL information, and transmitting the generated multimedia data packet to the network entity taking into account the B-NAL information.

In accordance with yet another embodiment of the present invention, there is provided a network entity apparatus for forwarding a multimedia data packet. The network entity apparatus includes a forwarding policy decider for receiving a multimedia packet including Top-down Network Abstraction Layer (T-NAL) information from a transmission device, and forwarding the multimedia packet depending on the received T-NAL information.

### [Advantageous Effects]

According to the present invention, an integrated network abstraction layer applicable to all multimedia data is provided to make it possible to provide a multimedia service by reflecting importance (or priority) of media data, resource reservation status, and network status, or user requirements.

In addition, an integrated network abstraction layer capable of abstracting information is provided for information exchange between an upper protocol layer and a lower protocol layer, making it possible to efficiently use communication resources using cross layer optimization.

### [Description of Drawings]

The above and other objects, features and advantages of certain embodiments of the present invention will be more apparent from the following detailed description taken in conjunction with the accompanying drawings, in which:
FIG. 1 shows a Video Coding Layer (VCL) and a Network Abstraction Layer (NAL) in H.264/AVC;
FIG. 2 shows a format of a NAL unit;
FIG. 3 shows a structure of a transmitter according to an embodiment of the present invention;
FIG. 4 shows a method of including T-NAL information in an IP packet according to an embodiment of the present invention;
FIG. 5 shows an example of generating an IP packet header for an IP packet with T-NAL information included in it according to an embodiment of the present invention;
FIG. 6 shows an example of a B-NAL information format for each stream according to an embodiment of the present invention; and
FIG. 7 shows an exemplary operation by a structure of a Media Aware Network Element (MANE) device according to an embodiment of the present invention.

### [Best Mode]

Reference will now be made in detail to the exemplary embodiments of the present invention with reference to the accompanying drawings. The terms used herein are selected taking into account their functions in the embodiments, and the meanings of the terms may be subject to change depending on users, operator's intents, and/or precedents. Therefore, the meanings of the terms used in the below-described embodiments of the present invention will be based on the detailed definitions made in the specification, if any, and shall be construed as the meanings generally understood by those of ordinary sill in the art, if there is no detailed definition thereof.

Prior to a detailed description of the present invention, the basic concepts of the present invention will be described.

In the present invention, the concept of a Network Abstraction Layer (NAL) used in standards for video data, such as MPEG-4/Advanced Video Coding (AVC, H.264), Scalable Video Coding (SVC), and Multi-view Video Coding (MVC), is applied not only to video data but also to other media (audio, graphics, texts, etc.) data services.

As described in FIG. 2, the existing NAL header 210 includes information indicating importance of the video packet. The NAL header for SVC includes Layer Identification Information 230 for identifying the temporal-level, the dependency-level, and the quality-level, and the NAL header for MVC includes information indicating a view number.

This information is information that is abstracted and generated in a top-down interface where information is delivered from an upper protocol layer to a lower protocol layer, and since it may indicate importance of the packet, packet services may be adaptively provided depending on the information, e.g., network status and/or terminal status.

In the present invention, an identifier called 'label' is defined to expand the concept of NAL to all media. The term 'label' as used herein may refer to an identifier for identifying each stream (e.g., video stream, audio stream, etc.).

The present invention proposes a T-NAL layer, which is a Top-down interface for abstracting information related to transmission media data, and a B-NAL layer, which is a Bottom-up interface for abstracting information related to network status. In the following description, data-related information abstracted in the T-NAL layer may be referred to as N-NAL information, and network status information abstracted in the B-NAL layer may be referred to as B-NAL information.

In the present invention, a transmission device (e.g., a server or a terminal) generates the T-NAL information and transmits it in a header of the packet, and a network entity (e.g., a router or a base station) identifies importance of the packet or resource reservation status based on the T-NAL information, and may transmit the packet according thereto. In addition, the network entity may generate the B-NAL information, and the transmission device may adaptively transmit the packet taking into account the current network status based on the B-NAL information.

The present invention will be described in detail below.

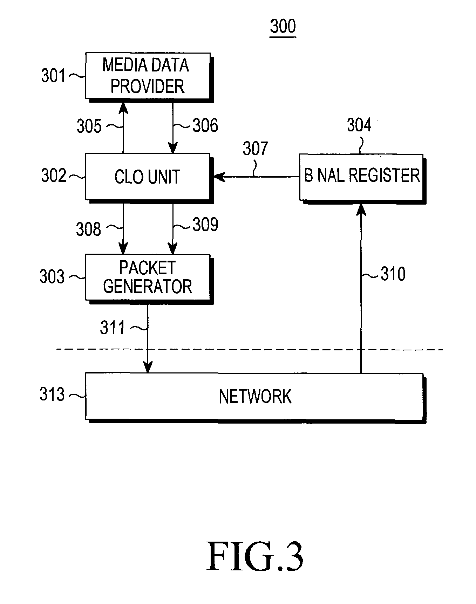

FIG. 3 shows a structure of a transmitter according to an embodiment of the present invention. The transmitter may be a server or a terminal.

A transmitter device 300 includes a media data provider 301, a packet generator 303, a Cross Layer Optimization (CLO) unit 302, which is a structure unique for the present invention, and a B-NAL register 304.

The B-NAL register 304 receives B-NAL information 310 from a network 313 and stores it therein. Generally, the B-NAL information is network status information generated by a network entity. In some cases, however, the B-NAL information may be information about QoS requested by a user terminal. For example, if the user terminal is in a poor status where it cannot receive high-QoS services, the user may request low-QoS services. In this case, the B-NAL information may be the information that the user terminal generated at the user's request. In the following description, however, the B-NAL information will be assumed to be network status information for convenience purpose only.

The CLO unit 302 adaptively determines the QoS of media data, at which it will read and transmit the B-NAL information stored in the B-NAL register 304, requests the media data provider 301 to provide the transmission media data in at least one Access Unit (AU) (see 305), and receives media data from the media data provider 301 (see 306).

Thereafter, the CLO unit 302 forwards the transmission media data to the packet generator 303 in one IP packet (see 309). The CLO unit 302 generates T-NAL information (e.g., label information) for the media data and delivers it to the packet generator 303 (see 308). As described above, the label information may be used by the sub-network to recognize importance (or priority) of the packet or resource reservation status.

The packet generator 303 generates a packet including the received label information, and transmits the generated packet over the network 313 (see 311). The label information may be included in a header of an IP packet or in a packet header of another lower protocol.

An example of transmitting a packet by the structure of FIG. 3 will be described below.

It is assumed that for a terminal, a label of an audio data stream is set as 1, a label of a text data stream is set as 2, and a label of a video data stream is set as 3. Also, it is assumed that even a priority for the stream in which the label is set, is set among the transmitter, the network entity and the receiver. If the transmitter desires to transmit a video data packet, it generates a packet with label information set as 3, and transmits the generated packet. Then, the network entity (e.g., router) may recognize importance (or priority) or resource reservation information of the received packet based on the label information (=3) of the received packet. Thereafter, the network entity may transmit a packet taking into account the network status and the importance (or priority) or resource reservation information of the received packet. The label for each data stream and the importance (or priority) or resource reservation information associated with the label may be set in a call setup process among the transmitter, the receiver, and the network entity.

When transmitting the video packet, the transmitter may consider the B-NAL information as well. In other words, the transmitter may adaptively change even the transmission priority of the video packet taking into account the network status which is B-NAL information.

T-NAL information, which is Top-down interface information, proposed by the present invention, will be described below.

As for the T-NAL information, information for allowing a network entity of the lower layer to recognize loss importance and delay importance (or priority), or resource reservation information of a media data packet is included in the packet in the form of a label (i.e., tag). The T-NAL information format proposed by the present invention may be used along with other existing protocol standards, e.g., IP header, TCP/UDP header, and RTP header protocols. In order to provide a media service using the T-NAL information, a call setup process among the transmitter, the receiver, and the network entity is needed. In other words, as for the T-NAL information, the entities make a mutual agreement on what the label value means, through the call setup process.

In the present invention, for the T-NAL information, a format for the per-class QoS scheme and a format for the per-flow QoS scheme are defined differently.

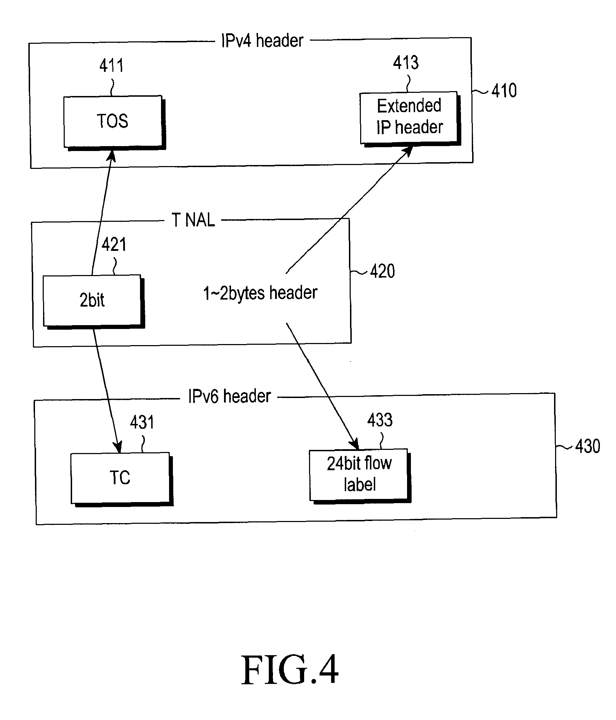

In the per-class QoS scheme, importance information or priority information for distinguishing the importance for packets of a stream is included in the form of a label, because resource reservation for service provisioning between the transmitter and the receiver is not needed. For example, one video stream is segmented into an 1-frame stream, a B-frame stream and a P-frame stream, and label values are determined for these segments. For reference, an audio stream may be higher in importance than a video frame. As described below with reference to FIG. 4, a label value may be inserted into a TOS field of an IPv4 header or in a TC field of an IPv6 header. For example, if the label value is set with 2 bits, importance of packets may be differentiated in the order of 11, 10, 01, 00. In other words, a label value of '11' may be inserted into an audio packet, a label value of '10' may be inserted into a base layer video packet, a label value of '01' may be inserted into an enhancement layer-1 video packet, and a label value of '00' may be inserted into an enhancement layer-2 video packet. For reference, in SVC, video may be divided into base layer video, enhancement layer-1 video, and enhancement layer-2 video.

In the per-flow QoS scheme, resource reservation is made separately for streams, and for this purpose, label information is included in the related flow. For example, when it is assumed that resource of 300kbps is reserved for a flow with a label value set as 1, a label value generated and included in the packet by a transmitter is 1, and upon determining the label value included in the packet, a network entity transmits the flow using the resource of 300kbps, which corresponds to the label value of 1. In this case, however, the currently available resources should be considered together. The resource reservation may be made separately for sessions as well. In addition, in order to support label switching during call setup between transmitting and receiving networks, label information may be configured in units of streams or sessions based on which resource reservation was made.

The resource reservation process and the label value setting may be agreed in advance in the call setup process between the transmitter and the receiver. For reference, when supporting Multi Protocol Label Switching (MPLS), a network entity may configure a proposed label format so as to be compatible with the label format supported by the MPLS. In this case, if the receiver may recognize the proposed label being compatible with the label of MPLS, the existing NAL header defined in SVC may not need to be transmitted. In addition, among contents of the existing RTP header and UDP header, information that does not vary during one session may include labels. For reference, the term 'label switching' as used herein may refer to technology for routing a layer-3 packet in a layer 2, and to a scheme of adding a separate label instead of an IP address to a data packet and implementing switching based on the label, thereby enabling fast switching.

A scheme of transmitting the T-NAL information will be described below.

FIG. 4 shows a method of including T-NAL information in an IP packet according to an embodiment of the present invention.

In a T-NAL information format proposed by the present invention, a virtual header for a NAL packet is defined. Information contained in the virtual header is to be contained in a packet header (e.g., IP packet header) of a lower layer, and the types of the virtual may be headers classified into a short NAL header (ST NAL header) 421 and a long NAL header (LT NAL header) 420.

The short NAL header 421 may be applied when the lower layer uses the per-class QoS scheme, and preferably, its length may be 2 bits, though it may vary depending on system settings. The short NAL header 421 may be inserted into a TOS field 411 in an IPv4 header 410, or may be inserted into a TC field 431 in an IPv6 header 430.

The long NAL header 420 may be applied when the lower layer uses the per-flow QoS scheme, and preferably, its length may be 1 to 2 bytes, though it may vary depending on system settings. The long NAL header 420 may be inserted into an extended IP header 413 in the IPv4 header 410, or may be inserted into a flow label field 433 in the IPv6 header 430.

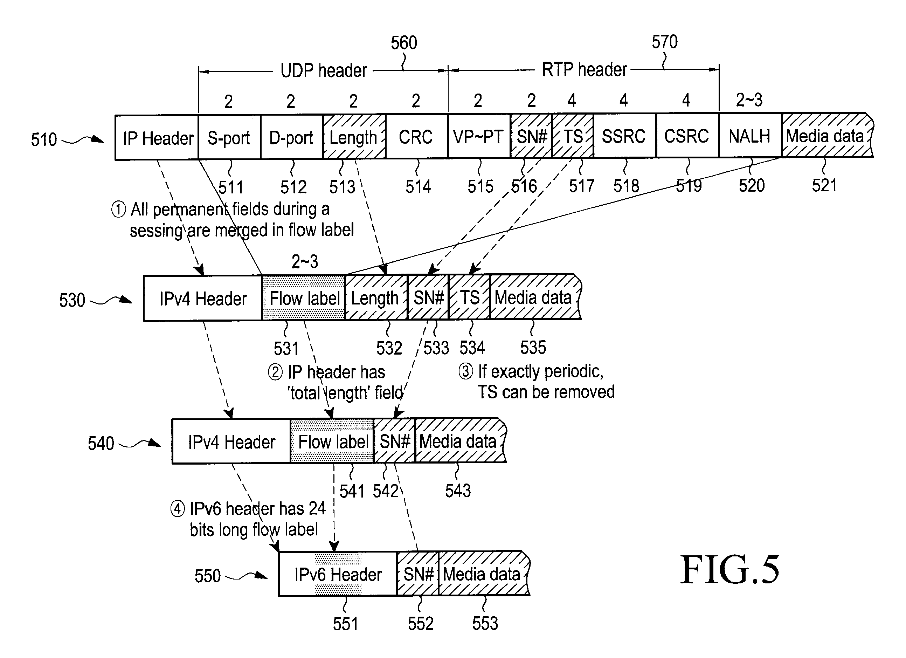

FIG. 5 shows an example of generating an IP packet header for an IP packet with T-NAL information included in it according to an embodiment of the present invention.

The example described in connection with FIG. 5 is a method of simplifying a header by removing the same repetitive parts from UDP and RTP headers among a plurality of packets to apply it to a real-time media stream. Reference numerals 510, 530 and 540 represent IPv4 packets, and reference numeral 550 represents an IPv6 packet. In each packet, a UDP header and an RTP header are simplified to generate label information.

Reference numeral 510 represents a media packet for transmission of real-time media data such as VOD service. Reference numeral 560 represents a UDP header, and reference numeral 570 represents an RTP header.

Commonly, in the case of real-time media services, tens or hundreds of packets are transmitted per second in one session, and due to the characteristics of real-time media streams, headers of the transmission media packet include the same fields that repeat in the packets transmitted during one session. Reference numerals 511, 512, 514, 515, 518, 519 and 520 represent the same repetitive fields. A notable field is a NALH field 520, which represents a NAL header, and as described in connection with FIG. 2, the NAL header includes information indicating importance (or priority) of a packet. Reference numerals 513, 516 and 517 represent the fields which vary in different packets. In some cases, however, these fields may be the same or may overlap other fields. A detailed description of the functions of the fields will be omitted.

In the packet 530, the same fields repeating in the UDP header 560 and the RTP header 570 of the packet 510 are gathered and inserted as one label information (or a flow label field) 531, and the fields varying in different packets are arranged following the flow label field 531.

In the packet 530, a Length field 532 overlaps a Length field (not shown) included in an IP header. Therefore, the Length field 532 may be omitted. A TS field 534 is a Time Stamp, and if generation of the media data is periodic, this information may be calculated by a receiver and thus may be omitted. In the packet 540, the Length field 532 overlapping in the packet 530 and the TS field 534 that can be calculated in the receiver, are omitted. The packet 550 represents an IPv6 packet, which has a flow label field 551 with a length of 24 bits, and with the use of this field, the proposed label information may be include in an IPv6 header.

When the existing non-simplified header is used, the receiver should parse all fields. Advantageously, however, when the header is simplified as shown in FIG. 5, the receiver does not need to parse the fields corresponding to a flow label every time.

B-NAL information, which is bottom-up interface information proposed by the present invention, will be described below.

Generally, the proposed B-NAL information is network status information generated by a network entity of a lower layer. However, as described above, in some cases, the B-NAL information may be QoS information generated and requested by a user terminal. However, in the following description, the B-NAL information will be assumed to be network status information.

The network status information may include an available bitrate, a packet loss ratio, a delay and/or a jitter. In addition to this information, status of a router buffer or a reception buffer may be further included therein. For example, a delay and a packet loss ratio measured as results of a Real Time Transport Protocol (RTP) which is a real-time control packet transport protocol, and/or the results measured in a Medium Access Control (MAC) layer of a Wireless Local Area Network (WLAN) or in 3rd Generation Partnership Project (3GPP) RAN, may be included therein.

The B-NAL information may be generated separately for streams or services (or sessions). When the B-NAL information is generated on a service (or session) basis, an entity including B-NAL registers will have a separate B-NAL register for each session. When the B-NAL information is generated on a stream basis, the entity including B-NAL registers will have an individual B-NAL register for each stream.

Schemes of displaying the above information constituting the network status information may be roughly classified into three different types. A first scheme is to use absolute values. For example, as for the available bitrate, it may be used in units of Mbps. A second scheme is to display relative values against a reference value. For example, if a resource of 1 Mbps was reserved during call setup but the currently available bitrate is 800 Kbps, the available bitrate may be displayed as "80%". A third scheme is to use a rate of change in the information. In other words, a change in the information between the previous time and the current time is displayed.

The B-NAL information may be stored in B-NAL registers of an application system in an upper layer entity. The B-NAL register may be configured separately for each service, or may be configured separately for a plurality of streams constituting one service.

The B-NAL information may be generated periodically or aperiodically. If the B-NAL information is periodically generated in the lower layer, even the upper layer may periodically check the B-NAL information. If the B-NAL information is aperiodically generated, even the upper layer will check it aperiodically. In this case, if an interrupt indicating the storage of new information in a B-NAL register is generated, the upper layer may check the B-NAL information stored in the B=NAL register.

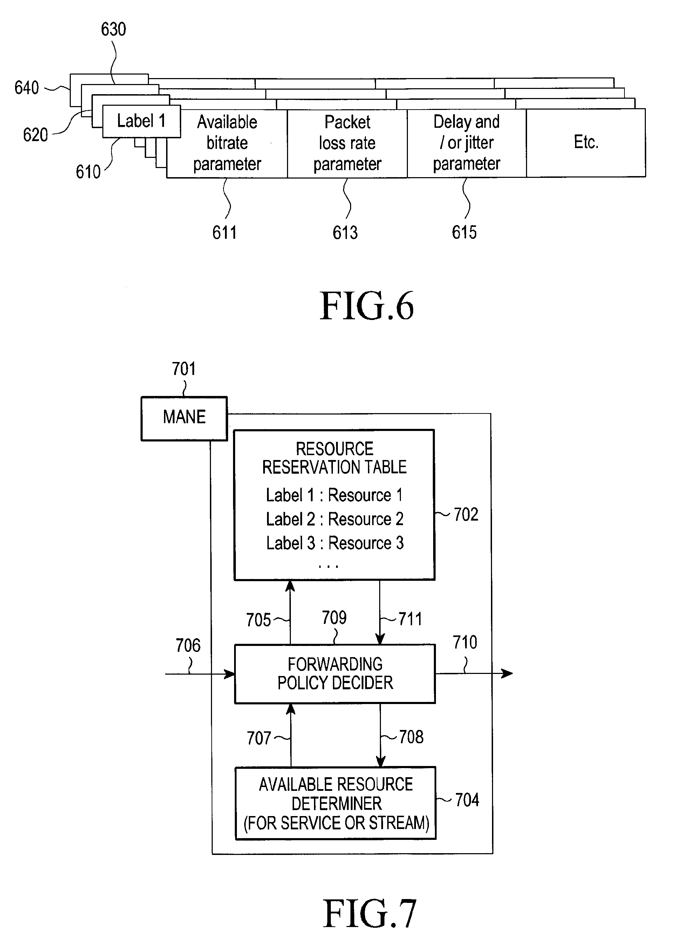

FIG. 6 shows an example of a B-NAL information format for each stream according to an embodiment of the present invention.

B-NAL information is generated separately for streams as shown by reference numerals 610, 620, 630 and 640 in FIG. 6, so label information of the streams may be displayed. An available bitrate parameter 611, a packet loss rate parameter 613, and a delay and/or jitter parameter 615 for streams with a specific label may be assumed to be included in the B-NAL information.

So far, the T-NAL information and B-NAL information defined in the present invention have been described. Use of the T-NAL information and B-NAL information may enable CLO. The term 'CLO' as used herein may refer to providing media data services by a media network entity that performs network-aware video coding and operates by recognizing information (e.g., importance or priority) about media streams. For reference, an entity that provides services using the information about media streams is called a Media Aware Network Element (MANE) in MPEG. In the following description, the term "MANE" will be used.

An operation of the network entity (i.e., MANE) proposed by the present invention will be described below.

A network entity that forwards received media packets, like a router, an IEEE802-series MAC layer, and 3GPP BMSC, may operate as an MANE that can adaptively forward received packets depending on their importance based on the label information in the T-NAL information. For example, a router using a diffServ routing scheme discards packets in the order of lower priority, if data overflows its buffer. To this end, the router checks a label value of T-NAL.

In the case of the per-class QoS scheme, received packets are adaptively processed based on priority information (e.g., label value) included in an IP header regardless of the service to which the received packets belong. For example, in a case where an audio packet with a label value of 11, a base layer video packet with a label value of 10, an enhancement layer-1 video packet with a label value of 01, and an enhancement layer-2 video packet with a label value of 00 are received, a packet is discarded depending on the label values, if any one of the packets should be discarded due to the network status or the overflow of the router buffer. In other words, the packets will be discarded in the order of the enhancement layer-2 video packet, the enhancement layer-1 video packet, the base layer video packet, and finally, the audio packet. For reference, in the IEEE802.11e standard, packets are inserted into a predetermined queue depending on their importance information written in an IP header. Commonly, priorities are set in four levels, and the speed of packets exiting from a queue and the method of handling the packet loss may be different depending on the queue.

The per-flow QoS scheme checks a label value and supports QoS (bitrate, loss rate, delay, etc.) based on the resource that is predetermined depending on the label value. The predetermined resource may be determined by searching a resource reservation table stored in advance in a network entity separately for streams and determining resource corresponding to the label. For example, in IEEE802.16, if QoS for an audio stream is determined as Unsolicited Guaranteed Service (UGS), QoS requirements predetermined according thereto are guaranteed. Therefore, the resource reservation table is stored in the network entity until the service is ended. In other words, upon receiving a packet from the transmitter, the network entity checks a label of the packet, searches the resource reservation table for QoS requirements of the stream with the label, and provides a service using the resource according thereto.

FIG. 7 shows an exemplary operation by a structure of a Media Aware Network Element (MANE) device according to an embodiment of the present invention.

A MANE 701 includes a resource reservation table 702, a forwarding policy decider 709, and an available resource determiner 704.

Upon receiving a packet from a transmitter (see 706), the forwarding policy decider 709 in the MANE 701 adaptively forwards the packet depending on the forwarding policy. The forwarding policy varies depending on the label value included in T-NAL information of the received packet.

When supporting the per-class QoS, the MANE 701 checks a class of the packet and determines whether to forward the packet, based the check. When supporting the per-stream QoS, the MANE 701 checks a label value, checks the resources stored in the resource reservation table 702 and allocated to the label (see 705 and 711), receives available resource information from the available resource determiner 704 (see 707), and determines a forwarding policy in the available resources and forwards the packet according to the forwarding policy (see 710).

An operation of a receiver according to an embodiment of the present invention will be described in brief below.

The receiver includes a decoder separately for each stream, and secures a buffer needed by the decoder. If a received packet includes a label, the receiver may check the label and determine a decoder matching with the relevant packet. If there is no label in the packet, the receiver may read an RTP header and determine a decoder for decoding the media packet.

An entity, in which a B-NAL register capable of receiving and storing the B-NAL information is placed, will be described below.

If the media service is a 1:1 video call, or a unicast service such as VOD, the transmitter may have a B-NAL register. The MANE updates B-NAL information in the B-NAL register of an application layer in the transmitter by signaling. In this case, the transmitter periodically or aperiodically reads the B-NAL register and adaptively transmits the media data. For example, in the case where the available bitrate is 54 Mbps, but it decreases to 2 Mbps and the packet loss rate increases as the user enters a shaded area, then the network status information will be delivered to and stored in the B-NAL register. In this case, the transmitter transmits videos on the lowest layer in SVC, and may transmit as many FEC packets as needed to overcome the loss of packets.

When a receiver requests the media quality, a B-NAL register may be configured in the receiver, receive B-NAL information from the network, and request QoS appropriate for the next transmission packet depending on the B-NAL information.

For multicast/broadcast packets such as a multi-party video call (or video conference) service, the transmitter sets the highest QoS and transmits the packets. The transmitter transmits the packets depending on the QoS needed at a branch where a path of the packets is branched. For example, assuming that an SVC HDTV service with a rate of 10 Mbps and HDTV connected to VDSL are simultaneously serviced on a mobile phone connected to HSDPA, if it is considered that an MANE is on a path branched into two paths, an MANE, in which a change in channel conditions of an HSDPA channel is the same as that of a 3GPP BMSC, may include a B-NAL register. In this example, if the available bitrate is 5 Mbps but it decreases down to 2 Mbps and the packet loss rate increases as the user enters a shaded area, then the network status information is recorded in a B-NAL register of the MANE. In this case, the MANE may forward only the lower-tier video of SVC according thereto and generate and transmit as many FEC packets as needed to overcome the packet loss. A sum of the transmission media data and the FEC packet should be lower than or equal to 2 Mbps.

When connected to a new broadcast or multicast, a random access may receive data needed for cal setup by 1:1 communication by requesting a server. Otherwise, the server may periodically transmit necessary information to the random access. For a 24-hour service, a predetermined default T-NAL may be defined.

If a user requests QoS of a packet, the user-requested QoS is recognized on a User Interface (UI) provided by a user's application layer. In the unicast, the requirements are recorded in a B-NAL register of a transmitter by signaling. In the multicast, the requirements are recorded in a B-NAL register of an MANE that manages the traffic input to a user terminal. If the user's requirements exceed the QoS range that can be provided by the network, the service is limited to the range that can be provided by the network. However, if the user's requirements are less than the range that can be provided by the network, the service is provided as requested by the user.

## Claims

1. A method for transmitting a multimedia data packet, comprising:
receiving Bottom-up Network Abstraction Layer (B-NAL) information from a network entity;
generating Top-down Network Abstraction Layer (T-NAL) information about transmission multimedia data;
generating a multimedia data packet including the T-NAL information; and
transmitting the generated multimedia data packet to the network entity taking into account the B-NAL information.

2. The method of claim 1, wherein the B-NAL information includes the current network status information.

3. The method of claim 1, wherein the B-NAL information includes network status information generated by at least one entity among a plurality of network entities.

4. The method of claim 1, wherein the B-NAL information includes information about Quality of Service (QoS) requested by a user terminal.

5. The method of claim 1, wherein the B-NAL information is generated separately for streams or services.

6. The method of claim 1, wherein the T-NAL information includes a predetermined label value indicating importance of a packet, in a per-class QoS scheme.

7. The method of claim 6, wherein the T-NAL information is included in a TOS field of an IPv4 packet header, or in a TC field of an IPv6 packet header.

8. The method of claim 1, wherein the T-NAL information includes a predetermined label value indicating resource reservation for a stream, in a per-stream QoS scheme.

9. The method of claim 8, wherein the T-NAL information is included in an extended field of an IPv4 packet header, or in a TC field of an IPv6 packet header.

10. The method of claim 1, wherein the T-NAL information is generated by substituting a flow label for the same repetitive part in a UDP header and an RTP header in the multimedia data packet.

11. A method for forwarding a multimedia data packet by an entity on a network, comprising:
receiving a multimedia packet including Top-down Network Abstraction Layer (T-NAL) information from a transmission device; and
forwarding the multimedia packet depending on the received T-NAL information.

12. The method of claim 11, wherein the T-NAL information includes a predetermined label value indicating importance of a packet, in a per-class QoS scheme.

13. The method of claim 12, wherein the forwarding comprises forwarding the multimedia packet depending on the importance of a packet, which corresponds to the label value.

14. The method of claim 12, wherein the T-NAL information is included in a TOS field of an IPv4 packet header, or in a TC field of an IPv6 packet header.

15. The method of claim 11, wherein the T-NAL information includes a predetermined label value indicating resource reservation for a stream, in a per-stream QoS scheme.

16. The method of claim 15, wherein the forwarding comprises forwarding the multimedia packet taking into account a resource that is pre-scheduled according to the label value, and the currently available resource.

17. The method of claim 15, wherein the T-NAL information is included in an extended field of an IPv4 packet header, or in a TC field of an IPv6 packet header.

18. The method of claim 11, wherein the T-NAL information is generated by substituting a flow label for the same repetitive part in a UDP header and an RTP header in the multimedia data packet.

19. An apparatus for transmitting a multimedia data packet, comprising:
a Bottom-up Network Abstraction Layer (B-NAL) register for receiving B-NAL information from a network entity;
a Cross Layer Optimization (CLO) unit for generating Top-down Network Abstraction Layer (T-NAL) information about transmission multimedia data; and
a packet generator for generating a multimedia data packet including the T-NAL information, and transmitting the generated multimedia data packet to the network entity taking into account the B-NAL information.

20. The apparatus of claim 19, wherein the B-NAL information includes the current network status information.

21. The apparatus of claim 19, wherein the B-NAL information includes network status information generated by at least one entity among a plurality of network entities.

22. The apparatus of claim 19, wherein the B-NAL information includes information about Quality of Service (QoS) requested by a user terminal.

23. The apparatus of claim 19, wherein the B-NAL information is generated separately for streams or services.

24. The apparatus of claim 19, wherein the T-NAL information includes a predetermined label value indicating importance of a packet, in a per-class QoS scheme.

25. The apparatus of claim 24, wherein the T-NAL information is included in a TOS field of an IPv4 packet header, or in a TC field of an IPv6 packet header.

26. The apparatus of claim 19, wherein the T-NAL information includes a predetermined label value indicating resource reservation for a stream, in a per-stream QoS scheme.

27. The apparatus of claim 26, wherein the T-NAL information is included in an extended field of an IPv4 packet header, or in a TC field of an IPv6 packet header.

28. The apparatus of claim 19, wherein the T-NAL information is generated by substituting a flow label for the same repetitive part in a UDP header and an RTP header in the multimedia data packet.

29. A network entity apparatus for forwarding a multimedia data packet, comprising:
a forwarding policy decider for receiving a multimedia packet including Top-down Network Abstraction Layer (T-NAL) information from a transmission device, and forwarding the multimedia packet depending on the received T-NAL information.

30. The network entity apparatus of claim 29, wherein the T-NAL information includes a predetermined label value indicating importance of a packet, in a per-class QoS scheme.

31. The network entity apparatus of claim 29, wherein the forwarding policy decider forwards the multimedia packet depending on the importance of a packet, which corresponds to the label value.

32. The network entity apparatus of claim 30, wherein the T-NAL information is included in a TOS field of an IPv4 packet header, or in a TC field of an IPv6 packet header.

33. The network entity apparatus of claim 29, wherein the T-NAL information includes a predetermined label value indicating resource reservation for a stream, in a per-stream QoS scheme.

34. The network entity apparatus of claim 33, further comprising:
a resource reservation table including information about a resource that is pre-scheduled depending on the label value; and
an available resource determiner for determining the currently available resource;
wherein the forwarding policy decider forwards the multimedia packet taking into account a resource that is pre-scheduled according to the label value, and the currently available resource.

35. The network entity apparatus of claim 33, wherein the T-NAL information is included in an extended field of an IPv4 packet header, or in a TC field of an IPv6 packet header.

36. The network entity apparatus of claim 29, wherein the T-NAL information is generated by substituting a flow label for the same repetitive part in a UDP header and an RTP header in the multimedia data packet.
